# EUROPEAN PATENT SPECIFICATION

(11) **EP 4 682 491 B1**
(45) Date of publication and mention of the grant of the patent: **09.09.2026**
(21) Application number: 25189756.7
(22) Date of filing: 15.07.2025
(51) Int. Cl.: G01J 5/04, G01J 5/061

(54) **PHASE CHANGE MATERIAL BASED TEMPERATURE STABILIZATION FOR SATELLITE-BASED INFRARED IMAGING**
AUF PHASENWECHSELMATERIAL BASIERENDE TEMPERATURSTABILISIERUNG FÜR SATELLITENBASIERTE INFRAROTBILDGEBUNG
STABILISATION DE TEMPÉRATURE BASÉE SUR UN MATÉRIAU À CHANGEMENT DE PHASE POUR IMAGERIE INFRAROUGE PAR SATELLITE

(30) Priority: 19.07.2024 LU 507801
(43) Date of publication of application: 21.01.2026
(73) Proprietor: OroraTech GmbH, 81669 München (DE)
(72) Inventor: GEISMAYR, Laura, 81669 Munich (DE); LILL, Katja, 81669 München (DE)
(74) Representative: MERH-IP Matias Erny Reichl Hoffmann Patentanwälte PartG mbB

(56) References cited:
- EP-A1- 2 635 017
- US-B1- 6 515 285
- NUGENT PAUL W ET AL: "Correcting for focal-plane-array temperature dependence in microbolometer infrared cameras lacking thermal stabilization", OPTICAL ENGINEERING, SOCIETY OF PHOTO-OPTICAL INSTRUMENTATION ENGINEERS, 1000 20TH ST. BELLINGHAM WA 98225-6705 USA, vol. 52, no. 6, 1 June 2013 (2013-06-01), pages 61304, XP060025847, ISSN: 0091-3286, [retrieved on 20130107], DOI: 10.1117/1.OE.52.6.061304

## Description

### TECHNICAL FIELD

The present disclosure relates generally to the field of temperature stabilization for satellite-based thermal-infrared measurement equipment. The present disclosure further relates to housing assemblies for housing microbolometers within satellites (e.g., small satellites, such as CubeSats), and in particular to housing assemblies for stabilizing the temperature of microbolometers enclosed therein.

### BACKGROUND

Any discussion of the background art throughout the disclosure should in no way be considered as an admission that such art is widely known or forms part of common general knowledge in the field.

Typically, thermal infrared cameras of small satellites (e.g., CubeSats) use uncooled microbolometers (e.g., microbolometer detectors) for performing temperature measurements of Earth's surface. Since microbolometers are very sensitive with regard to temperature changes, zero-point calibration must be performed even for minute temperature changes, for example in the range of a few Millikelvin. Such calibration can be conveniently performed by closing a shutter of the thermal infrared camera and comparing the detected IR radiation to an expectation thereof, but this calibration method creates a "dead time" of the detector, during which the detector cannot be used for actual measurements.

Accordingly, there is need for techniques that can reduce the dead time for uncooled thermal imagers, in particular microbolometers. In US 6 515 285 B1 temperature stabilization of a microbolometer in fire fighter equipment using phase change material is described.

### SUMMARY

In view of this need, the present disclosure provides housing assemblies for microbolometers, microbolometer assemblies, and satellites comprising microbolometer assemblies, having the features of the independent claims.

A first aspect of the present invention relates to a housing assembly according to claim 1 for housing a microbolometer within a satellite (e.g., small satellite, such as a CubeSat). The housing assembly includes a container for at least partially enclosing the microbolometer, so as to exchange heat with the microbolometer. The housing assembly further comprises a phase change material (PCM). The container comprises a cavity within a wall portion of the container. The cavity contains the PCM.

Thereby, the PCM can be provided and securely contained so as to be compatible with mechanical loads and vibrations typically occurring during satellite launch and the like. Moreover, the PCM can be provided so as to allow for very good heat exchange with the microbolometer. Temperature fluctuations of the microbolometer can then be effectively prevented by the buffer effect of the PCM, which can passively absorb heat and stabilize temperatures around its melting point (i.e., phase change point, phase transition point).

By virtue of this temperature stabilization, the number of calibration cycles for the microbolometer can be reduced, along with unwanted period of dead time of the microbolometer.

In some embodiments, the container may have a double wall configuration for containing the PCM. Thereby, the PCM can be securely contained, while still allowing for very good heat exchange with the microbolometer.

In some embodiments, the container may comprise a base part and a lid part. The base part may include the wall portion. The cavity in the wall portion may be closed by the lid part when the lid part is mounted to the base part.

In some embodiments, the container may comprise a sealable filling port for filling the PCM into the cavity. The PCM may for example be filled into the cavity by opening the seal or cover of the sealable port.

In some embodiments, the container may be fixable to a base plate to which the microbolometer can be attached.

In some embodiments, the container may comprise an opening for allowing a circuit board of the microbolometer to protrude from the container.

In some embodiments, the housing assembly may further comprise one or more temperature sensors. To this end, the container may comprise respective recesses for mounting the one or more temperature sensors.

In some embodiments, the housing assembly may further comprise a heat conducting material. The heat conducting material may be attached on an inner wall portion of the container. For example, the heat conducting material may be arranged to be sandwiched between the microbolometer and the inner wall of the container when the container at least partially encloses the microbolometer. The heat conducting material may for example be arranged on all four sides of the microbolometer, for improving heat transfer between the microbolometer and the container, and eventually, the PCM.

The heat conducting material provides for better thermal contact between the microbolometer and the container. Thereby, heat exchange between the PCM and the microbolometer, and by extension, temperature stabilization, can be improved.

In some embodiments, the housing assembly may comprise a heating element. The heating element may be arranged to be sandwiched between the heat conducting material and the inner wall portion of the container. The heating element may for example be attached on all sides of the inner wall of the container.

In some embodiments, the housing assembly may further comprise a controller. The controller may be configured to control the heating element for bringing the temperature of the PCM to be within a predefined temperature range around a phase change temperature of the PCM. The heating element may for example be controlled to be switched on in order to heat the PCM inside the cavity.

In some embodiments, the controller may be configured to control the heating element based on sensor data from the one or more temperature sensors. Thereby, the temperature of the PCM, and by extension, of the microbolometer can be kept constant around the phase change point of the PCM, for stabilizing temperature of the microbolometer.

The heating element may be a foil, such as an insulated metal foil, for example. The heating element can be used to heat up the microbolometer if the temperature of the microbolometer should fall below a certain temperature, and can further bring the PCM to its phase transition temperature. Thereby, temperature stabilization of the microbolometer can be improved stabilized.

In some embodiments, the container may comprise one or more mounting holes for connection cables connecting to a circuit board of the microbolometer. The one or more mounting holes may be arranged and/or dimensioned for providing strain relief to respective connection cables that are arranged, for example, to extend along an outer wall of the container.

A second aspect of the invention relates to a microbolometer assembly. The microbolometer assembly comprises a microbolometer and the housing assembly according to the first aspect.

A third aspect of the invention relates to a satellite. The satellite comprises the microbolometer assembly according to the second aspect.

It should be noted that the methods and apparatus (e.g., housing assemblies, microbolometer assemblies, satellites) including the preferred embodiments as outlined in the present patent application may be used stand-alone or in combination with the other methods and apparatus disclosed in this document. Furthermore, all aspects of the methods and apparatus outlined in the present patent application may be arbitrarily combined. In particular, the features of the claims may be combined with one another in an arbitrary manner.

It will be appreciated that device features and method steps may be interchanged in many ways. In particular, the details of the disclosed housing assembly can be realized by the corresponding manufacturing method, and vice versa, as the skilled person will appreciate. Moreover, any of the above statements made with respect to the housing assembly (and, e.g., its parts, elements, etc.) are understood to likewise apply to the corresponding manufacturing method (and, e.g., its steps), and vice versa.

### BRIEF DESCRIPTION OF THE DRAWINGS

Example embodiments of the present disclosure are described below, by way of example only, with reference to the accompanying drawings in which:
**Fig. 1** schematically illustrates an example of part of a housing assembly according to embodiments of the present disclosure,
**Fig. 2** schematically illustrates another view of part of the housing assembly of **Fig. 1** according to embodiments of the present disclosure, and
**Fig. 3** schematically illustrates an example of a housing assembly according to embodiments of the present disclosure.

### DETAILED DESCRIPTION

In the following, example embodiments of the present disclosure will be described with reference to the appended figures. Identical elements in the figures may be indicated by identical (or similar) reference numbers, and repeated description thereof may be omitted for the sake of conciseness.

Frequent calibration cycles for thermal imaging equipment typically lead to periods of time during which the equipment is not available for actual measurements, thus reducing coverage (so-called dead times).

Generally, the number of calibration cycles that are necessary for operating uncooled thermal imagers, such as microbolometers, could be reduced by providing for improved temperature stabilization of the thermal imagers. For large-scale satellites, this can typically be to some extent achieved by active cooling and heating, using for example cryocoolers, heating elements, or Peltier elements, by discharging heat from the equipment via thermal straps coupled to a radiator, or by using multi-layer insulation.

However, such solutions are not directly applicable to smaller satellites, such as CubeSats, for example.

The present disclosure, broadly speaking, provides a housing assembly that contains a PCM and that encapsulates the microbolometer and its electronics, to optimally exchange heat with the microbolometer and to thereby stabilize the temperature of the microbolometer by means of the buffer effect of the PCM. Since this temperature stabilization is passive, energy consumption can be kept at a minimum. The present disclosure further foresees additional components including heat conducting materials, temperature sensors, and heating elements for aiding PCM-based temperature stabilization. Thereby, the present disclosure provides means for reducing a calibration-induced downtime of infrared imaging equipment even for small satellites, such as CubeSats.

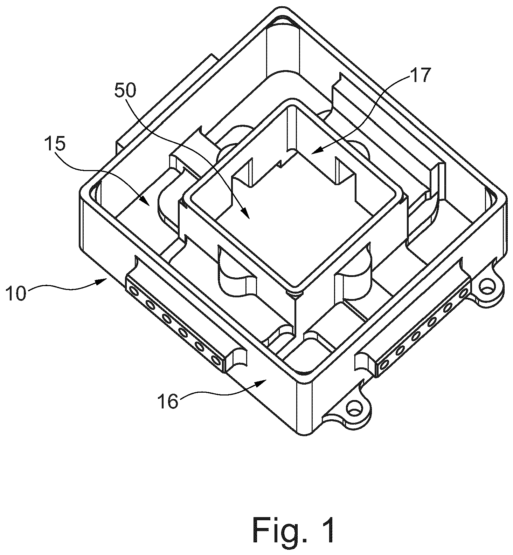

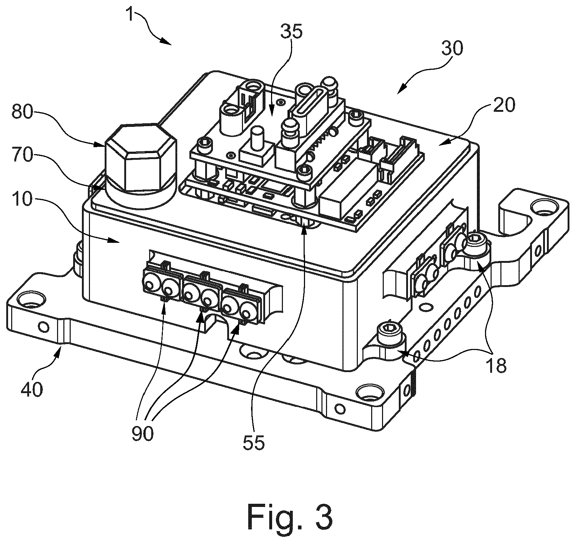

**Fig. 1** schematically illustrates a top view of an example of a container 10 as part of a housing assembly 1 according to embodiments of the present disclosure. The container 10 may be made of a solid material with good thermal conductivity. Preferably, the chosen material may at the same time allow for a light-weight implementation of the container 10. In particular, the solid material may be a metal, e.g., aluminum. The container 10 is foreseen to at least partially enclose a microbolometer 30 (see **Fig. 3****)** or other infrared imaging equipment, so as to exchange heat with the microbolometer. Accordingly, dimensions of the container 10, in particular of an inner volume 50 thereof, may be tailored to dimensions of the microbolometer 30 to be (at least partially) enclosed.

The inner volume 50 for housing (i.e., enclosing or at least partially enclosing) the microbolometer 30 is bounded by an inner wall 17 of the container 10. An outer wall 16 of the container 10 faces towards the outside of the container 10.

The housing assembly 1 according to the present disclosure comprises the container 10 and a PCM. Therein, the container 10 is adapted for containing the PCM, to thereby provide temperature stabilization to the microbolometer 30 when enclosed by the container 10. To this end, the container 10 comprises a cavity 15 within a wall portion 16, 17 of the container 10. The cavity 15 is configured to contain the PCM in an assembled state of the housing assembly 1.

As can be seen from **Fig. 1****,** the container 10 may be configured to have a double wall configuration. That is, the cavity 15 may be arranged between the inner wall (inner wall portion) 17 and the outer wall (outer wall portion) 16 of the container 10. This cavity may fully extend through a lateral wall of the container 10 to laterally surround the inner volume 50 (as shown in the present example). Alternatively, two or more cavities that are separated from each other may be provided throughout the wall portion (e.g., lateral wall) of the container 10.

Some examples of PCMs may have a different volumes in solid and liquid form. The cavity 15 defined in the wall portion of the container 10, for example between the outer wall 16 and the inner wall 17 of the container 10 may thus be designed to accommodate for a change in volume of the PCM when it transitions between its solid and liquid form, and vice versa. For example, the container 10 may be designed to provide some degree of flexibility to accommodate for the change in volume of the PCM.

In some implementations, the container may comprise a base part 10 and a lid part 20 (see **Fig. 3****).** The base part 10 thereof may include the wall portion with the cavity 15 within the wall portion. The lid part 20 may be configured to close (e.g., cover) the cavity 15 in the wall portion when the lid part 20 is mounted to the base part 10. Thus, the cavity 15 may be said to be formed by the base part 10 and the lid part 20, or more specifically, by inner and outer walls of the base part 10, a bottom portion of the base part 10, and the lid part 20. **Fig. 1** shows the base part of the container 10, while the lid part is omitted.

The container 10 may be fixable to a base plate 40 (see **Fig. 3****)** to which the microbolometer 30 can be attached. Fixation to the base plate 40 may be achieved by flanges 18 arranged at the outer wall 16 of the container 10.

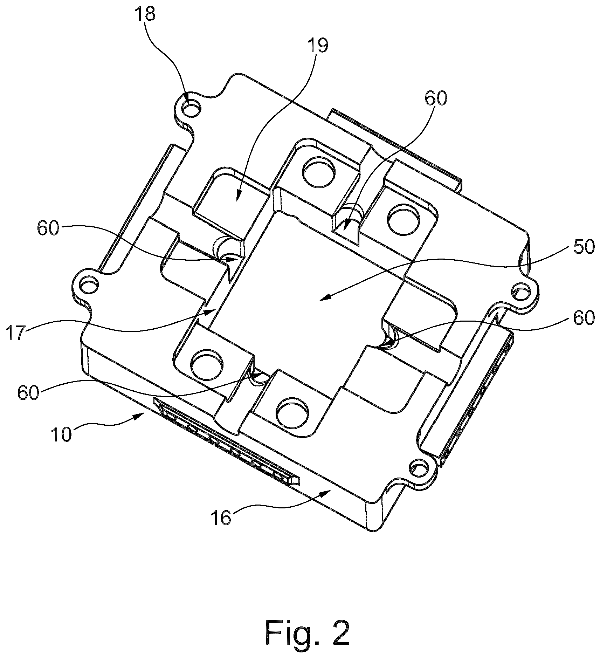

**Fig. 2** schematically illustrates a bottom view of the container 10 of **Fig. 1****.**

In some situations, it may be required to heat the PCM to its phase transition point (e.g., melting point), for example during periods in which the satellite passes through Earth's shadow. This can be done using heating elements, controlled in accordance with an actual temperature of the PCM or container 10, as measured by one or more temperature sensors.

Accordingly, housing assemblies 1 according to embodiments of the disclosure may comprise one or more temperature sensors. These temperature sensors may be arranged adjacent to the inner volume 50, for example on the inner wall 17 of the container 10. To this end, as can be seen in **Fig. 2****,** the container 10 (e.g., the base part thereof) may comprise slits or recesses 60 in the inner wall 17 for accommodating electronic components, such as temperature sensors, and optionally, any wire connections to these electronic components. These recesses 60, and correspondingly, temperature sensors, may be provided on one or more, for example all four, sides of the inner volume 50.

To improve heat transfer to the container 10 including the PCM and/or to the temperature sensors, the housing assembly 1 may further comprise heat conducting material (not shown in the figures) attached to the inner wall (inner wall portion) 17 of the container 10. That is, the heat conducting material may be arranged to be sandwiched between the microbolometer 30 and the inner wall 17 of the container 10 in an assembled state of the housing assembly 1 where the container 10 at least partially encloses the microbolometer 30.

As noted above, the housing assembly 1 may further comprise a heating element (not shown in the figures) for heating the PCM (or the container 10 containing the PCM) to bring the PCM to its phase transition point. For example, the heating element may be an insulated metal foil or mesh of metal wires. This foil or mesh may be attached to the inner wall portion 17 of the container 10. Without intended limitation, the heating element may be a polyimide heater, for example.

In configurations where the housing assembly 1 comprises the heating element, the heating element may be arranged to be sandwiched between the heat conducting material and the inner wall portion 17 of the container 10.

The container 10 may further comprise, at its bottom side, slots 19 for mounting structures of the microbolometer 30, for example for allowing or facilitating fixation to the base plate 40.

**Fig. 3** illustrates an example of a housing assembly 1 according to embodiments of the disclosure. This housing assembly 1 may be suitable for use as part of a microbolometer assembly for satellites, in particular small satellites, such as CubeSats.

As can be seen from the figure, the microbolometer 30 may be arranged within the inner volume 50 of the container 10, so that the container 10 encapsulates the microbolometer 30. In general, the container 10 may be said to at least partially enclose the microbolometer 30.

While the container 10 is configured to enclose (e.g., encapsulate) or at least partially enclose the microbolometer 30, it may comprise an opening 55 allowing part of the microbolometer 30 to protrude from. For example, the opening 55 may allow a circuit 35 board of the microbolometer 30 to protrude (or partially protrude) from the container 10.

As is also shown in **Fig. 3****,** the container 10 may comprise a sealable filling port 70 for filling the PCM into the cavity 15. The sealable port 70 may be sealable by means of a lid or cap 80 that may be, for example, screwed or screwable to the sealable port 70.

In some implementations, the container 10 may comprise one or more mounting holes 90. The mounting holes 90 may be mounting holes for connection cables that connect to a circuit board of the microbolometer 30, for example. Accordingly, the one or more mounting holes 90 may be arranged and/or dimensioned for providing strain relief to respective connection cables that are arranged, for example, along the outer wall 16 of the container 10. In the example of **Fig. 3****,** cables extending along the outer wall 16 in a vertical direction to connect to the circuit board (35) may run through respective mounting holes 90.

Finally, as mentioned above, the housing assembly 1 may comprise a heating element (not shown in the figures). The heating element may operate under control of a controller. Accordingly, the housing assembly 1 may further comprise a controller for controlling, inter alia, the heating element. For example, the controller may be configured to control the heating element for bringing the temperature of the PCM to be within a predefined temperature range around a phase change temperature of the PCM. This may be relevant for example when the satellite passes through Earth's shadow. Notably, the controller is not configured to perform accurate temperature control for stabilizing the microbolometer's temperature; rather, it is sufficient if the controller controls the heating element so that the phase change temperature of the PCM is reached. To achieve this aim, the controller may be configured to control the heating element based on sensor data from the one or more temperature sensors mentioned above.

While a housing assembly has been described above, it is understood that the present disclosure likewise relates to a microbolometer assembly comprising a microbolometer and the above housing assembly, and to a satellite (e.g., CubeSat) comprising the microbolometer assembly.

It should be noted that the description and drawings merely illustrate the principles of the proposed filter assembly and manufacturing method. Those skilled in the art will be able to implement various arrangements that, although not explicitly described or shown herein, embody the principles of the invention and are included within its scope as defined by the appended claims.

Furthermore, all examples and embodiment outlined in the present disclosure are principally intended expressly to be only for explanatory purposes to help the reader in understanding the principles of the proposed method and device. Furthermore, all statements herein providing principles, aspects, and embodiments of the invention, as well as specific examples thereof, are intended to encompass equivalents thereof.

## Claims

1. A housing assembly (1) for housing a microbolometer (30) within a satellite, the housing assembly (1) comprising:
a container (10) for at least partially enclosing the microbolometer (30), so as to exchange heat with the microbolometer (30); and
a phase change material;
wherein the container (10) comprises a cavity (15) within a wall portion of the container (10); and
wherein the cavity (15) contains the phase change material.

2. The housing assembly (1) according to claim 1, wherein the container (10) has a double wall configuration for containing the phase change material.

3. The housing assembly (1) according to claim 1 or 2, wherein the container (10) comprises a base part (10) and a lid part (20);
wherein the base part (10) includes the wall portion; and
wherein the cavity (15) in the wall portion is closed by the lid part (20) when the lid part (20) is mounted to the base part (10).

4. The housing assembly (1) according to any one of the preceding claims, wherein the container (10) comprises a sealable filling port (70) for filling the phase change material into the cavity (15).

5. The housing assembly (1) according to any one of the preceding claims, wherein the container (10) is fixable to a base plate (40) to which the microbolometer (30) can be attached.

6. The housing assembly (1) according to any one of the preceding claims, wherein the container (10) comprises an opening (55) for allowing a circuit board (35) of the microbolometer (30) to protrude from the container (10).

7. The housing assembly (1) according to any one of the preceding claims, further comprising one or more temperature sensors.

8. The housing assembly (1) according to claim 7, wherein the container (10) comprises respective recesses (60) for mounting the one or more temperature sensors.

9. The housing assembly (1) according to any one of the preceding claims, further comprising a heat conducting material,
wherein the heat conducting material is attached on an inner wall portion (17) of the container (10).

10. The housing assembly (1) according to claim 9, wherein the heat conducting material is arranged to be sandwiched between the microbolometer (30) and the inner wall (17) of the container (10) when the container (10) at least partially encloses the microbolometer (30).

11. The housing assembly (1) according to any of the preceding claims, further comprising a heating element,
wherein the heating element is arranged to be sandwiched between the heat conducting material and the inner wall portion (17) of the container (10).

12. The housing assembly (1) according to any of the preceding claims, further comprising a controller,
wherein the controller is configured to control the heating element for bringing the temperature of the phase change material to be within a predefined temperature range around a phase change temperature of the phase change material.

13. The housing assembly (1) according to claim 12 in its dependence on claim 7, wherein the controller is configured to control the heating element based on sensor data from the one or more temperature sensors.

14. The housing assembly (1) according to any one of the preceding claims,
wherein the container (10) comprises one or more mounting holes (90) for connection cables connecting to a circuit board (35) of the microbolometer (30); and
wherein the one or more mounting holes (90) are arranged and/or dimensioned for providing strain relief to respective connection cables.

15. A microbolometer assembly comprising:
a microbolometer (30); and
the housing assembly (1) according to any one of the preceding claims.

16. A satellite comprising the microbolometer assembly according to claim 15.

## Patentansprüche

1. Gehäusegruppe (1) zum Unterbringen eines Mikrobolometers (30) innerhalb eines Satelliten, wobei die Gehäusegruppe (1) umfasst:
einen Behälter (10) zum Umschließen wenigstens des Mikrobolometers (30) derart, dass Wärme mit dem Mikrobolometer (30) ausgetauscht wird; und
ein Phasenwechselmaterial;
wobei der Behälter (10) eine Ausnehmung (15) innerhalb eines Wandabschnitts des Behälters (10) umfasst; und
wobei die Ausnehmung (15) das Phasenwechselmaterial umfasst.

2. Gehäusegruppe (1) nach Anspruch 1, wobei der Behälter (10) eine Doppelwand-Konfiguration zum Umfassen des Phasenwechselmaterials aufweist.

3. Gehäusegruppe (1) nach Anspruch 1 oder 2, wobei der Behälter (10) einen Basisteil (10) und einen Deckelteil (20) umfasst;
wobei der Basisteil (10) den Wandabschnitt umfasst; und
wobei die Ausnehmung (15) im Wandabschnitt durch den Deckelteil (20) geschlossen ist, wenn der Deckelteil (20) am Basisteil (10) montiert ist.

4. Gehäusegruppe (1) nach irgendeinem der vorhergehenden Ansprüche,
wobei der Behälter (10) einen versiegelbaren Füllport (70) zum Füllen des Phasenwechselmaterials in die Ausnehmung (15) umfasst.

5. Gehäusegruppe (1) nach irgendeinem der vorhergehenden Ansprüche,
wobei der Behälter (10) befestigbar an einer Basisplatte (40) ist, an der der Mikrobolometer (30) befestigt sein kann.

6. Gehäusegruppe (1) nach irgendeinem der vorhergehenden Ansprüche,
wobei der Behälter (10) eine Öffnung (55) umfasst, um es einer Schaltplatte (35) des Mikrobolometers (30) zu ermöglichen, aus dem Behälter (10) hervorzustehen.

7. Gehäusegruppe (1) nach irgendeinem der vorhergehenden Ansprüche, weiterhin umfassend einen oder mehrere Temperaturfühler.

8. Gehäusegruppe (1) nach Anspruch 7, wobei der Behälter (10) jeweilige Ausschnitte (60) zum Montieren des einen oder der mehreren Temperaturfühler(s) umfasst.

9. Gehäusegruppe (1) nach irgendeinem der vorhergehenden Ansprüche, weiterhin umfassend ein Wärme leitendes Material,
wobei das Wärme leitende Material auf einem inneren Wandabschnitt (17) des Behälters (10) befestigt ist.

10. Gehäusegruppe (1) nach Anspruch 9, wobei das Wärme leitende Material angeordnet ist, um zwischen dem Mikrobolometer (30) und der Innenwand (17) des Behälters (10) eingefügt zu sein, wenn der Behälter (10) den Mikrobolometer (30) wenigstens teilweise umschließt.

11. Gehäusegruppe (1) nach irgendeinem der vorhergehenden Ansprüche, weiterhin umfassend ein Heizelement,
wobei das Heizelement angeordnet ist, um zwischen dem Wärme leitenden Material und dem Innenwand-Abschnitt (17) des Behälters (10) eingefügt zu sein.

12. Gehäusegruppe (1) nach irgendeinem der vorhergehenden Ansprüche, weiterhin umfassend eine Steuerung,
wobei die Steuerung konfiguriert ist, um das Heizelement zu steuern, um die Temperatur des Phasenwechselmaterials innerhalb eines vorbestimmten Temperaturbereichs um eine Phasenwechseltemperatur des Phasenwechselmaterials zu bringen.

13. Gehäusegruppe (1) nach Anspruch 12 in seiner Abhängigkeit von Anspruch 7, wobei die Steuerung konfiguriert ist, um das Heizelement basierend auf den Fühlerdaten von dem einen oder den mehreren Temperaturfühler(n) zu steuern.

14. Gehäusegruppe (1) nach irgendeinem der vorhergehenden Ansprüche, wobei der Behälter (10) ein Montageloch (90) oder mehrere Montagelöcher (90) für Anschlusskabel umfasst, die eine Schaltplatte (35) des Mikrobolometers (30) anschließen; und
wobei das eine Montageloch (90) oder die mehreren Montagelöcher (90) angeordnet und/oder ausgelegt ist/sind, um jeweiligen Anschlusskabeln Zugentlastung bereitzustellen.

15. Mikrobolometergruppe, umfassend:
einen Mikrobolometer (30); und
die Gehäusegruppe (1) nach irgendeinem der vorhergehenden Ansprüche.

16. Satellit, umfassend die Mikrobolometergruppe nach Anspruch 15.

## Revendications

1. Ensemble de logement (1) destiné à loger un microbolomètre (30) dans un satellite, l'ensemble de logement (1) comprenant :
un conteneur (10) destiné à contenir au moins partiellement le microbolomètre (30), de manière à permettre un échange de chaleur avec le microbolomètre (30) ; et
un matériau à changement de phase ;
dans lequel le conteneur (10) comprend une cavité (15) dans une portion de paroi du conteneur (10) ; et
dans lequel la cavité (15) contient le matériau à changement de phase.

2. Ensemble de logement (1) selon la revendication 1, dans lequel le conteneur (10) présente une configuration à double paroi pour contenir le matériau à changement de phase.

3. Ensemble de logement (1) selon la revendication 1 ou 2, dans lequel le conteneur (10) comprend une partie de base (10) et une partie de couvercle (20) ;
dans lequel la partie de base (10) inclut la portion de paroi ; et
dans lequel la cavité (15) dans la portion de paroi est fermée par la partie de couvercle (20) quand la partie de couvercle (20) est montée sur la partie de base (10).

4. Ensemble de logement (1) selon l'une quelconque des revendications précédentes,
dans lequel le conteneur (10) comprend un orifice de remplissage scellable (70) pour remplir la cavité (15) avec le matériau à changement de phase.

5. Ensemble de logement (1) selon l'une quelconque des revendications précédentes,
dans lequel le conteneur (10) est fixable à une plaque de base (40) à laquelle le microbolomètre (30) peut être attaché.

6. Ensemble de logement (1) selon l'une quelconque des revendications précédentes,
dans lequel le conteneur (10) comprend une ouverture (55) permettant à un circuit imprimé (35) du microbolomètre (30) de dépasser du conteneur (10).

7. Ensemble de logement (1) selon l'une quelconque des revendications précédentes, comprenant en outre un ou plusieurs capteurs de température.

8. Ensemble de logement (1) selon la revendication 7, dans lequel le conteneur (10) comprend des renfoncements respectifs (60) pour le montage desdits un ou plusieurs capteurs de température.

9. Ensemble de logement (1) selon l'une quelconque des revendications précédentes, comprenant en outre un matériau conducteur de chaleur,
dans lequel le matériau conducteur de chaleur est attaché sur une portion de paroi interne (17) du conteneur (10).

10. Ensemble de logement (1) selon la revendication 9, dans lequel le matériau conducteur de chaleur est agencé de manière à être intercalé entre le microbolomètre (30) et la paroi interne (17) du conteneur (10) quand le conteneur (10) contient au moins partiellement le microbolomètre (30).

11. Ensemble de logement (1) selon l'une quelconque des revendications précédentes, comprenant en outre un élément chauffant,
dans lequel l'élément chauffant est agencé de manière à être intercalé entre le matériau conducteur de chaleur et la portion de paroi interne (17) du conteneur (10).

12. Ensemble de logement (1) selon l'une quelconque des revendications précédentes, comprenant en outre un contrôleur,
dans lequel le contrôleur est configuré pour contrôler l'élément chauffant afin d'amener la température du matériau à changement de phase dans une plage de température prédéfinie autour d'une température de changement de phase du matériau à changement de phase.

13. Ensemble de logement (1) selon la revendication 12 lorsqu'elle dépend de la revendication 7, dans lequel le contrôleur est configuré pour contrôler l'élément chauffant sur la base de données de capteur provenant desdits un ou plusieurs capteurs de température.

14. Ensemble de logement (1) selon l'une quelconque des revendications précédentes, dans lequel le conteneur (10) comprend un ou plusieurs trous de montage (90) pour connecter des câbles de connexion à un circuit imprimé (35) du microbolomètre (30) ; et
dans lequel lesdits un ou plusieurs trous de montage (90) sont agencés et/ou dimensionnés pour assurer une décharge de tension sur les câbles de connexion respectifs.

15. Ensemble microbolomètre comprenant :
un microbolomètre (30) ; et
l'ensemble de logement (1) selon l'une quelconque des revendications précédentes.

16. Satellite comprenant l'ensemble microbolomètre selon la revendication 15.
